# EUROPÄISCHE PATENTSCHRIFT

(11) **EP 3 581 837 B1**
(45) Veröffentlichungstag und Bekanntmachung des Hinweises auf die Patenterteilung: **10.11.2021**
(21) Anmeldenummer: 19176059.4
(22) Anmeldetag: 23.05.2019
(51) Int. Cl.: F16L 23/18, G01K 1/14, G01K 7/02, G01K 13/02, F16J 15/06

(54) **FLANSCHDICHTUNGSRING MIT INTEGRIERTER THERMOELEKTRISCHER MESSEINRICHTUNG UND ROHRLEITUNGSANORDNUNG**
FLANGE SEAL RING WITH INTEGRATED THERMOELECTRIC MEASURING DEVICE AND PIPING APPARATUS
ANNEAU D'ÉTANCHÉITÉ À BRIDE POURVU DE DISPOSITIF DE MESURE THERMOÉLECTRIQUE INTÉGRÉ ET ENSEMBLE DE TUYAUTERIE

(30) Priorität: 11.06.2018 DE 102018113914
(43) Veröffentlichungstag der Anmeldung: 18.12.2019
(73) Patentinhaber: KLINGER Kempchen GmbH, 46147 Oberhausen (DE); Temperaturmeßtechnik Geraberg GmbH, 98693 Martinroda (DE)
(72) Erfinder: Bial, Thorsten, 45899 Gelsenkirchen (DE); Lippmann, Lutz, 98693 Illmenau (DE); Bonitz, Björn, 98693 Illmenau (DE); Irrgang, Barbara, 98716 Geraberg (DE); Heinz, Andreas, 98716 Geschwenda (DE)
(74) Vertreter: Andrejewski - Honke Patent- und Rechtsanwälte Partnerschaft mbB

(56) Entgegenhaltungen:
- DE-B3-102013 203 904
- DE-U1-202013 103 059
- US-A- 1 643 734
- US-A1- 2015 268 111

## Beschreibung

Die Erfindung betrifft einen Flanschdichtungsring mit einer zentral angeordneten Durchgangsöffnung, umfassend eine integrierte thermische Messeinrichtung. Die Erfindung betrifft ferner eine Rohrleitungsanordnung mit einem erfindungsgemäßen Flanschdichtungsring.

Die Erfindung geht von einem Flanschdichtungsring aus, wie er zur Verbindung zweier mit Flanschen versehenen Rohrenden verwendet wird. Dabei erstrecken sich die Rohrenden entlang einer Längsachse, um die die Wandungen der Rohrenden rotationssymmetrisch angeordnet sind. Die Rohrenden schließen mit gegenüber der Längsachse senkrecht in radialer Richtung vorstehenden Flanschen ab. Zur Verbindung der beiden Rohrenden werden die Flansche aneinander positioniert und miteinander so verbunden, dass die Längsachsen der Rohrenden miteinander fluchten.

Zur Abdichtung sind kreisringförmige Flanschdichtungen bekannt, die zwischen die Flansche der Rohrenden eingelegt werden können. Solche Flanschdichtungsringe bestehen im Wesentlichen aus einem kreisringförmigen Körper, welcher eine durch einen Innendurchmesser begrenzte Durchgangsöffnung sowie einen Außendurchmesser aufweist. Die Differenz zwischen Innen- und Außendurchmesser (Breite des Dichtringes) ist deutlich größer als die in Längsachsenrichtung gemessene Dicke. Der Innendurchmesser ist üblicherweise an die Nennweite der Rohrenden angepasst, sodass in der Verbindungsstelle keine strömungstechnisch nachteilige Veränderung des Strömungsquerschnittes stattfindet. Der Außendurchmesser entspricht bevorzugt zumindest dem Außendurchmesser der Dichtleiste, sodass die gesamte Dichtfläche zur Abdichtung genutzt werden kann.

Bei Rohrleitungen kann es erforderlich sein, die Temperatur der einzelnen Komponenten sowie des durch die Rohrleitung strömenden Mediums zu überwachen. Hierbei kommen thermoelektrische Messeinrichtungen zum Einsatz. Deren Messprinzip beruht auf dem Seebeck-Effekt und macht sich die Temperaturabhängigkeit der Kontaktspannung an einer Kontaktstelle zwischen zwei unterschiedlichen elektrisch leitenden Materialien zunutze.

Zur Messung der Medientemperatur innerhalb der Rohrleitung sind verschiedene mechanische Anordnungen bekannt. Im aufwändigsten Fall wird ein metallisches Einschweißschutzrohr (sog. "Thermohülse") durch eine seitliche Öffnung in die Rohrleitung eingeschweißt und so in dem freien Strömungsquerschnitt der Rohrleitung eingeführt. Der Temperatursensor der Messsonde wird dabei von dem innerhalb der Rohrleitung befindlichen Medium umströmt, so dass eine besonders präzise Messung der Medientemperatur durchgeführt werden kann. Hierbei kann eine in den freien Strömungsquerschnitt hineinragende Messsonde das Strömungsverhalten der Rohrleitung negativ beeinflussen. Die Auslegung und Ausführung dieser Art der Messstelle ist überdies sehr aufwändig und insbesondere bei nachträglicher Installation äußerst kostenintensiv.

Weiterhin ist beispielsweise aus DE 102 27 454 A1 bekannt, einen Temperaturfühler außenseitig an die Wandung einer Rohrleitung anzulegen. Hierdurch wird die Strömung innerhalb des Rohres nicht negativ beeinflusst Da der Temperaturfühler nicht dem Medium ausgesetzt ist, wird er hierdurch auch nicht einer erhöhten mechanischen oder chemischen Belastung ausgesetzt.

Nachteilig bei dieser Anordnung ist jedoch, dass aufgrund der Messung durch die Rohrwandung ein hoher systematischer Messfehler auftreten kann. Weiterhin erfolgt die Temperaturmessung zeitverzögert, da das Material der Rohrwandung zunächst sich an eine geänderte Temperatur anpassen muss.

Als ein möglicher Mittelweg hat sich herausgebildet, ein thermoelektrisches Messelement in eine Flanschdichtung zu integrieren. So ist beispielsweise aus DE 10 2012 006 144 B3 bekannt, mehrere Messsonden in radial nach innen verlaufende Sackbohrungen einer Flanschdichtung einzusetzen. Die Kontaktierung der Messsonden ist sehr aufwändig und erfolgt über lange Zuleitungen, welche zu zusätzlichen Messfehlern führen können. Weiterhin führt diese Anordnung zu einem in Umfangsrichtung inhomogenen Aufbau der Dichtung. Durch die radial angeordneten Sacklochbohrungen wird der Dichtungsträger inhomogen und kann unter der aufgebrachten Dichtungsflächenpressung und des wirkenden Innendrucks zu einer Scherbeanspruchung führen, welche ein schlagartiges Versagen (sog. Ausblasen") der Dichtungskonstruktion verursachen kann.

Aus DE 10 2016 005 514 ist eine scheibenförmige Messeinrichtung bekannt, welche auch in eine Dichtung, beispielsweise eine Zylinderkopfdichtung, integriert werden kann. Die Messanordnung weist einen keramischen Kreisring sowie darauf angeordnete thermoelektrische Materialien in pastöser Form auf. Ein derartiges Messinstrument ist nicht geeignet, um als Dichtung im Krafthauptschluss bei hohen Dichtungsflächenpressungen für hohe Innendrücke integriert zu werden. Eine Isolation der pastösen Thermomaterialien ist aufwändig. Überdies ist der keramische Träger bruchempfindlich.

Aus DE 20 2013 103 059 U1 ist ein Temperaturmessring beschrieben, der aus zwei in Umfangsrichtung zusammengesetzten Halbscheiben unterschiedlicher Thermomaterialien besteht. Die druckempfindlichen Messstellen sind unmittelbar dem im Leitungsinnenraum angeordneten Medium ausgesetzt, so dass sie mit einem sicher funktionierenden Schutzüberzug versehen werden müssen, um funktionsfähig zu bleiben. Ein derartiger einfacher Überzug ist nicht ausreichend, um eine mechanische und chemisch-korrosive Sicherheit gegen Dichtungsversagen zu gewährleisten.

Aus DE 10 2013 203 904 B3 ist es bekannt, ein Messelement mit zwei in Axialrichtung übereinander angeordneten materialverschiedenen Elementen auszubilden. Hierbei werden verschiedene Varianten beschrieben, bei denen die Elemente blech- oder pastenförmig oder auch als Hohlringelemente ausgebildet sein können. Die Messstelle wird als Kontaktpunkt zwischen den beiden Elementen gebildet und kann insbesondere am Innendurchmesser der beiden Elemente angeordnet sein. Hierbei soll ein Überzug die Abdichtung gegenüber dem in der Rohrleitung vorhandenen Medium sicherstellen. Wie bereits zuvor erwähnt, ist ein derartiger einfacher Überzug ist nicht ausreichend, um eine mechanische und chemisch-korrosive Sicherheit gegen Dichtungsversagen zu gewährleisten.

Aus US 2015/0 268 111 A1 ist ein Dichtungsring bekannt, in den Sensoren in Bohrungen radial eingesetzt sind.

Vor diesem Hintergrund liegt der Erfindung die Aufgabe zugrunde, eine Flanschdichtung - insbesondere für Hochdruckdichtungen - mit einem integrierten thermoelektrischen Messelement anzugeben, bei dem die thermoelektrische Messeinrichtung besser vor Belastungen aus montagebedingter Dichtungsflächenpressung und den abzudichtenden Innendrücken sowie chemisch-korrosiven Angriffen geschützt ist. Gegenstand der Erfindung ist ferner eine Rohrleitungsanordnung, welche einen derartigen Flanschdichtungsring umfasst.

Gegenstand der Erfindung und Lösung dieser Aufgabe sind die Gegenstände der Patentansprüche 1 und 14. Bevorzugte Ausgestaltungen sind in den abhängigen Unteransprüchen angegeben.

Die Erfindung geht von einem gattungsgemäßen Flanschdichtungsring mit einer zentral angeordneten Durchgangsöffnung aus, welcher eine integrierte thermoelektrische Messeinrichtung umfasst. Die Messeinrichtung weist ein erstes elektrisch leitendes Scheibenelement und ein, gegenüber dem ersten Scheibenelement materialverschiedenes, zweites elektrisch leitendes Scheibenelement auf. Das erste Scheibenelement und das zweite Scheibenelement umschließen dabei die Durchgangsöffnung zumindest teilweise, bevorzugt vollständig. Das erste Scheibenelement und das zweite Scheibenelement sind ausschließlich durch zumindest eine an der der Durchgangsöffnung zugewandten Innenseite angeordneten Kontaktstelle miteinander elektrisch verbunden. Im Übrigen sind das erste Scheibenelement und das zweite Scheibenelement gegeneinander elektrisch isoliert. Erfindungsgemäß verbleibt zwischen der Innenseite der beiden Scheibenelemente und der Durchgangsöffnung ein Abstand, an dem die Messeinrichtung von einer Dichtstruktur abgedeckt ist. Die Dichtstruktur ist insbesondere aus einem thermisch und chemisch beständigen Material gebildet.

Durch das Dichtelement wird die Messeinrichtung hinreichend vor dem Innendruck des Mediums geschützt, so dass ein innendruckbedingtes schlagartiges Versagen der Dichtung ausgeschlossen werden kann. Das Dichtelement und die Messeinrichtung sind miteinander, insbesondere untrennbar, zu einem einheitlichen Flanschdichtungsring verbunden. Somit kann die Temperaturmessung an der Kontaktstelle zwischen dem ersten Scheibenelement und dem zweiten Scheibenelement aufgrund des thermoelektrischen Effektes in unmittelbarer Nähe zu der Durchgangsöffnung erfolgen.

Das erste Scheibenelement und das zweite Scheibenelement sind vorzugsweise aus einem dünnen Material, insbesondere aus einem Metall- oder Metalllegierungsblech, gebildet, welches in Dickenrichtung eine um zumindest ein oder mehrere Größenordnungen geringere Erstreckung als in Breitenrichtung aufweist. Das erste Scheibenelement und das zweite Scheibenelement sind senkrecht zur Längsachse der Rohrleitung bzw. zur Zentralachse der Durchgangsöffnung und in Axialrichtung übereinander angeordnet. Das erste Scheibenelement und das zweite Scheibenelement weisen bevorzugt zumindest abschnittsweise die Form einer Kreisscheibe auf, welche konzentrisch um die Mittelachse der Durchgangsöffnung angeordnet sind.

Zur Ermöglichung des thermoelektrischen Effektes sind das erste Scheibenelement und das zweite Scheibenelement aus unterschiedlichen leitfähigen Materialen ausgebildet. Diese liegen beide in fester, formstabiler Form vor. Die kreisringförmige Gestalt des ersten Scheibenelementes und des zweiten Scheibenelementes ermöglichen eine Integration in die Flanschdichtung. Die radiale Erstreckung, insbesondere der Außendurchmesser der kreisringförmigen Abschnitte sind dabei insbesondere an den Außendurchmesser der Flanschverbindungen angepasst, für welche der Flanschdichtungsring vorgesehen ist.

In einer bevorzugten Ausgestaltung der Erfindung ist zwischen dem ersten Scheibenelement und dem zweiten Scheibenelement zumindest eine Tragscheibe angeordnet. Die Tragscheibe, dient zur mechanischen Stabilisierung des Flanschdichtungsaufbaus sowie zur Montage der Flanschdichtung. Die Tragscheibe unterscheidet sich bevorzugt im Material sowohl von dem ersten Scheibenelement als auch von dem zweiten Scheibenelement und ist insbesondere aus einem Stahlblech gebildet.

Besonders bevorzugt ist die Tragscheibe an einer Seite mit einer radial nach außen abstehenden Anschlussfahne ausgebildet, an der eine Anschlussstelle oder eine Messelektronik zur Auswertung der durch die Kontaktstelle bereitgestellten Messsignale vorgesehen ist.

Vorzugsweise ist zwischen dem ersten Scheibenelement und dem zweiten Scheibenelement zumindest eine Isolatorscheibe angeordnet. Die Isolatorscheibe besteht aus einem elektrisch isolierenden Material und kann insbesondere mit dem ersten Scheibenelement und/oder dem zweiten Scheibenelement vollflächig in Kontakt stehen. Durch die Isolatorscheibe können mechanische Kräfte in Axialrichtung ― wie sie durch das Verpressen einer Flanschdichtung üblicherweise auftreten ― gut abgeleitet werden und gleichzeitig ein ungewollter mechanischer und elektrischer Kontakt ― insbesondere zwischen dem ersten Scheibenelement und dem zweiten Scheibenelement ― vermieden werden.

Bevorzugt ist zumindest eine Isolatorscheibe aus einem temperatur- und druckfesten elektrisch isolierenden Material, insbes. Glimmer, gebildet.

Alternativ oder zusätzlich kann eine Isolatorscheibe auch mehrschichtig ausgebildet sein und neben Glimmerscheiben auch Graphitscheiben und andere Isoliermaterialien beinhalten.

In einer besonders bevorzugten Ausgestaltung ist unmittelbar zwischen dem ersten Scheibenelement und dem zweiten Scheibenelement eine Anordnung vorgesehen, welche eine Isolatorscheibe, eine Tragscheibe und eine zweite Isolatorscheibe aufweist. Hierdurch wird die thermoelektrische Messeinrichtung als kompaktes Schichtpaket ausgebildet, bei dem die beiden Scheibenelemente jeweils untereinander und auch gegenüber einer stabilisierenden Tragscheibe elektrisch isoliert sind. Die in Axialrichtung benachbarten Scheiben liegen dabei mit kreisringförmigen Bereichen jeweils unmittelbar und vollflächig aneinander an, so dass eine geringe Bauhöhe bei gleichzeitiger mechanischer Stabilität erreicht werden kann.

Gemäß einer ersten erfindungsgemäßen Variante zur Verwendung als Flachdichtung ist die Dichtstruktur mit einer metallischen Hülle gebildet, welche die Messeinrichtung radial innenseitig vollständig und in axialer Richtung zumindest teilweise umschließt.

Ferner kann die Dichtstruktur eine Auflage, insbesondere aus Graphit oder anderen Weichstoffen, aufweisen, mit der die elektrisch isolierte thermoelektrische Messeinrichtung - insbesondere beidseitig - belegt ist.

Die metallische Hülle lässt sich bevorzugt aus einem kreisförmig angeordneten, geschweißten Metallband ausbilden. Im zweiten Schritt wird das geschweißte Metallband radial umgebördelt. Danach wird die metallische Hülle auf der einen Seite der Flanschdichtung axial eingesetzt und auf der anderen Seite mechanisch umgeformt und beidseitig an die Oberflächen angeglichen. Durch den Einsatz dieser metallischen Inneneinfassung wird eine mechanische Stabilisierung des Schichtaufbaus gegen den abzudichtenden Innendruck gewährleistet.

Zur elektrischen Isolation der thermoelektrischen Messeinrichtung gegenüber der metallischen Hülle ist bevorzugt eine Zwischenisolation vorgesehen. Diese kann aus einer innenliegenden Beschichtung der metallischen Hülle, einer außenliegenden Beschichtung des ersten Scheibenelementes und des zweiten Scheibenelementes und/oder aus zusätzlichen Isolatorringen bzw. Auflagen aus elektrisch nicht leitendem Material bestehen. Vorzugsweise kann die thermoelektrische Messeinrichtung - zumindest im kreisringförmigen Bereich - durch eine elektrische isolierende Beschichtung vollumfänglich ummantelt sein.

In radialer Richtung kann zwischen dem innenliegenden Ende der thermoelektrischen Messeinrichtung und der metallischen Hülle ein Hohlraum verbleiben. Dieser ist insbesondere mit einem elektrisch isolierenden und gut wärmeleitenden Füllmaterial ausgefüllt. Alternativ kann auch ein Luftspalt verbleiben.

In einer alternativen erfindungsgemäßen Ausgestaltung ist das Dichtelement als Dichtformkörper ausgebildet. Dieser ist aus einem einzigen integralen Stück eines Dichtmaterials gebildet und weist insbesondere eine Profilierung zur Verbesserung der Dichtwirkung auf. Insbesondere können an den Anlageflächen konzentrisch rotationssymmetrische Erhöhungen und Vertiefungen angeordnet sein, so dass sich ein sogenanntes Kammprofil bildet.

Gemäß der zweiten Erfindungsvariante weist der Dichtformkörper eine in radialer Richtung von außen offene und vollständig umlaufende Nut auf, in die die thermoelektrische Messeinrichtung eingesetzt ist. Somit ist die Messeinrichtung zumindest abschnittsweise an drei Seiten von dem Dichtkörper umschlossen und geschützt. Zwischen dem radial innenseitigen Ende der Messeinrichtung und der Durchgangsöffnung verbleibt ein Steg des Dichtformkörpers, welcher einen hinreichenden Schutz gegen mechanisches Versagen bereitstellt.

In einer bevorzugten Ausgestaltung ist die thermoelektrische Messeinrichtung ― zumindest mit den kreisringförmigen Abschnitten des ersten Scheibenelementes und des zweiten Scheibenelementes vollständig in die Nut des Dichtformkörpers eingeschoben.

Vorzugsweise sind das erste Scheibenelement und das zweite Scheibenelement an einer einzigen, vollständig umlaufenden Kontaktstelle miteinander verbunden. Hierdurch kann eine gleichzeitige Temperaturmessung am gesamten Umfang der Durchgangsöffnung erfolgen. Dabei lässt sich mit einfachem Aufwand die bei der Temperaturüberwachung besonders wichtige mittlere Grenztemperatur am gesamten Umfang ermitteln.

In einer alternativen bevorzugten Ausgestaltung sind das erste Scheibenelement und das zweite Scheibenelement an zumindest zwei Kontaktstellen miteinander verbunden. Vorzugsweise sind zumindest vier, insbesondere zumindest sechs Kontaktstellen vorgesehen. Diese sind besonders bevorzugt in Umfangsrichtung äquidistant angeordnet. Hierdurch kann gegenüber einer vollständig umlaufenden Kontaktstelle bei vertretbar kleinerer Messabdeckung der Produktionsaufwand reduziert werden.

Vorzugsweise wird jede Kontaktstelle durch eine Schweißverbindung zwischen dem ersten Scheibenelement und dem zweiten Scheibenelement gebildet. Die beiden Scheibenelemente werden dazu miteinander in unmittelbaren Kontakt gebracht und durch Wärmeeinwirkung miteinander stoffschlüssig verbunden. Es entsteht ein direkter, unvermittelter Materialkontakt, der zur Ausnutzung des thermoelektrischen Effektes vorteilhaft ist.

Vorzugsweise wird jede Kontaktstelle durch eine gegenüber der Schnittebene in Axialrichtung abgekantete Kontaktlasche des ersten Scheibenelementes gebildet, welcher sich in Axialrichtung bis zu dem zweiten Scheibenelement erstreckt. Hierdurch wird der axiale Abstand zwischen dem ersten Scheibenelement und dem zweiten Scheibenelement überbrückt und ein unmittelbarer Materialkontakt ermöglicht. Eine Umformung des zweiten Scheibenelementes ist nicht erforderlich.

Besonders bevorzugt sind die beiden Scheibenelemente einteilig umlaufend ausgebildet. Hierdurch kann der sichere elektrische Anschluss der Kontaktstellen gewährleistet werden. Eine aufwändige Verkabelung in Umfangsrichtung ist nicht erforderlich.

In einer alternativen Ausgestaltung können die Scheibenelemente auch in Umfangsrichtung segmentiert ausgebildet sein. Dies ist insbesondere dann erforderlich, wenn die thermoelektrische Messeinrichtung in eine radiale Nut eines nicht verformbaren Dichtformkörpers eingesetzt werden muss. Bei der Montage des Flanschdichtungsrings werden die einzelnen Segmente zu einem einheitlichen Scheibenelement zusammengefügt.

Die Erfindung betrifft auch eine Rohrleitungsanordnung mit einem einen ersten endseitig angeordneten Flansch ausbildenden ersten Rohrstück und einem einen zweiten endseitig angeordneten Flansch ausbildenden zweiten Rohrstück. Der erste Flansch und der zweite Flansch sind unter Zwischenschaltung eines zuvor beschriebenen Flanschdichtungsrings miteinander verbunden. Der Innendurchmesser des ersten Rohrstückes und des zweiten Rohrstückes entsprechen dabei der Durchgangsöffnung des Flanschdichtungsrings, so dass eine mediale Strömung durch die Rohrleitung die Flanschdichtungsstelle ungestört passieren kann. Die innerhalb des Flanschdichtungsringes angeordnete elektrische Messeinrichtung ist gegenüber Innendruck der Rohrleitung geschützt.

Die Erfindung wird nachfolgend anhand von lediglich Ausführungsbeispiele zeigenden Zeichnungen erläutert. Es zeigen dabei schematisch
- Fig. 1: eine perspektivische Darstellung eines erfindungsgemäßen Flanschdichtungsrings gemäß eines ersten Ausführungsbeispiels
- Fig. 2: eine Darstellung entsprechend Fig. 1 mit entfernter Dichtauflage sowie entfernter isolierender Beschichtung,
- Fig. 3: Explosionsdarstellung entsprechend Fig. 1,
- Fig. 4: eine perspektivische Darstellung eines erfindungsgemäßen Flanschdichtungsrings gemäß eines weiteren Ausführungsbeispiels,
- Fig. 5: eine Darstellung entsprechend Fig. 4 mit entferntem Dichtelement,
- Fig. 6: eine der Fig. 4 entsprechende Explosionsdarstellung,
- Fig. 7: eine radiale Schnittdarstellung durch einen erfindungsgemäßen Flanschdichtungsring, wie er in Fig. 1 dargestellt ist,
- Fig. 8: eine perspektivische Darstellung eines erfindungsgemäßen Flanschdichtungsringes in einer weiteren alternativen Ausgestaltungsform,
- Fig. 9: eine Darstellung entsprechend Fig. 8 ohne das Dichtelement,
- Fig. 10: eine der Fig. 8 entsprechende Explosionsdarstellung,
- Fig. 11: eine perspektivische Darstellung eines erfindungsgemäßen Flanschdichtungsringes bei einer weiteren alternativen Ausgestaltungsform,
- Fig. 12: eine Darstellung entsprechend Fig. 11 mit entferntem Dichtelement,
- Fig. 13: eine der Fig. 11 entsprechende Explosionsdarstellung und
- Fig. 14: einen radialen Schnitt durch einen erfindungsgemäßen Flanschdichtungsring gemäß den Darstellungen in Fig. 8 oder Fig. 11.

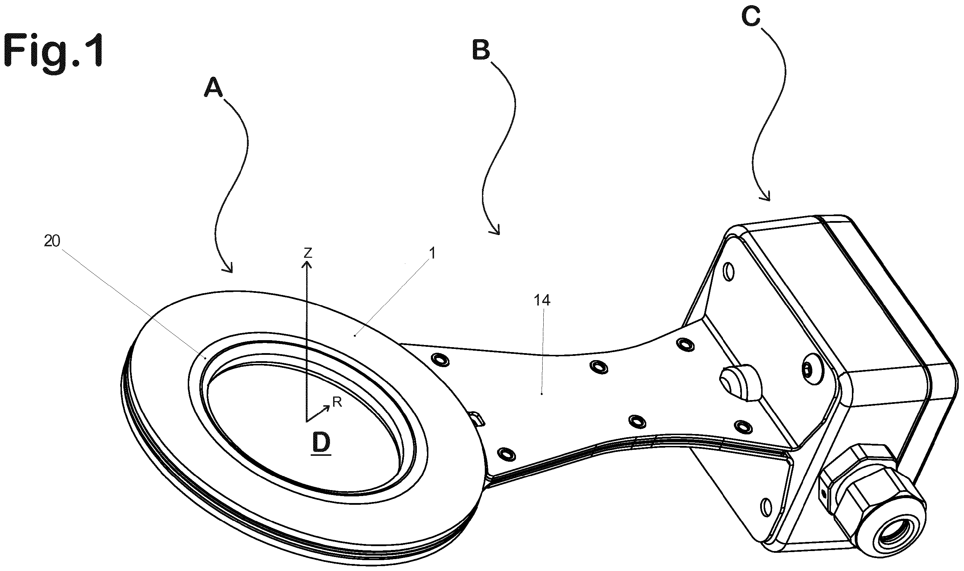

Die Fig. 1 zeigt einen erfindungsgemäßen Flanschdichtungsring gemäß eines ersten Ausführungsbeispiels. Der Flanschdichtungsring umfasst dabei einen kreisringförmigen Bereich A, welcher über einen Fahnenbereich B an eine elektronische Anschlusseinheit C angeschlossen ist. Innerhalb des kreisringförmigen Bereiches A ist zentral eine Durchgangsöffnung D angeordnet, welche sich kreisrund um eine Längsachse z erstreckt. Der kreisringförmige Bereich A ist konzentrisch um die Längsachse z angeordnet. Sofern nicht ausdrücklich Unterschiede hervorgehoben werden, gelten sämtliche Erläuterungen für alle Ausführungsbeispiele ― insbesondere in Bezug auf den generellen Aufbau und die räumliche Orientierung.

Der Flanschdichtungsring im Ausführungsbeispiel gemäß Fig. 1 ist als Flachdichtung mit einem Nenndurchmesser von 40 mm ausgebildet. Der in radialer Richtung R innere Abschluss des Flanschdichtungsrings sowie die in axialer Richtung +/- z liegenden Anlageflächen werden im gezeigten Ausführungsbeispiel durch zwei Dichtauflagen 1 gebildet. Zur Durchgangsöffnung D werden die thermoelektrische Messeinrichtung und die Dichtauflagen 1 durch eine metallische Hülle 20 eingefasst. An den Anlageflächen in axialer Richtung zum Kontakt mit angrenzenden Rohrflanschen sowie an dem der Durchgangsöffnung D zugewandten Innendurchmesser ist der erfindungsgemäße Flanschdichtungsring mit einer integrierten thermoelektrischen Messeinrichtung nicht von einem herkömmlichen Flanschdichtungsring zu unterscheiden.

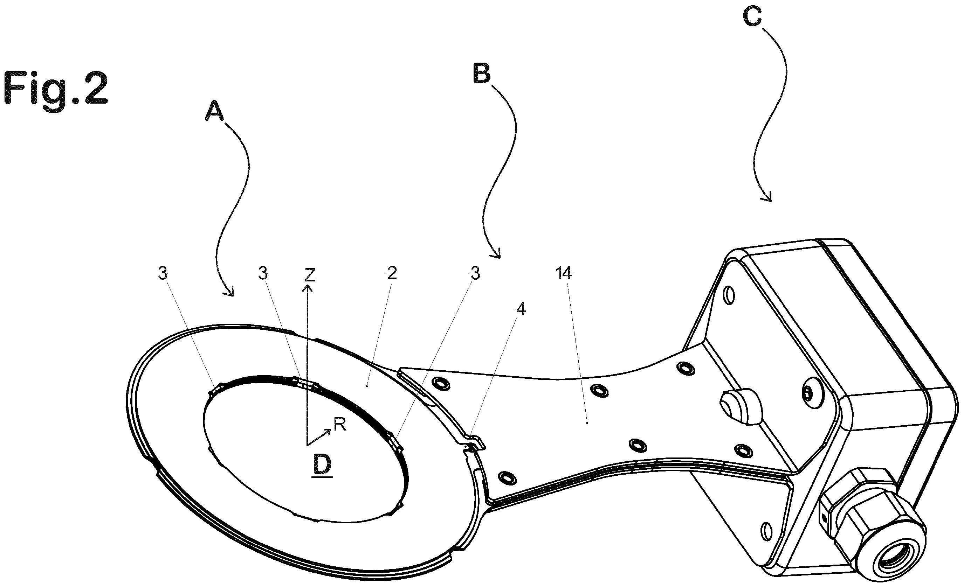

In der Darstellung gemäß Fig. 2 ohne die Dichtauflagen1 und die isolierende Beschichtung 19 ist die darin integrierte thermoelektrische Messeinrichtung sichtbar. Diese weist ein erstes elektrisch leitendes Scheibenelement 2 auf, welches im gezeigten Ausführungsbeispiel im Wesentlichen als kreisringförmige aus einem positiven Thermomaterial (z.B. Kupfer) ausgebildet ist. Diese ist in Umfangsrichtung einteilig ausgebildet und weist in Axialrichtung z eine deutlich geringere Erstreckung als in Radialrichtung R auf.

An der Innenseite des kreisringförmigen Abschnittes des ersten Scheibenelementes 2 sind insgesamt sechs, äquidistant über den Umfang verteilte Kontaktlaschen 3 vorgesehen, welche gegenüber dem kreisringförmigen Abschnitt in axialer Richtung z abgekantet sind. Die abgekantete Stelle ist dabei gegenüber dem Innendurchmesser des kreisringförmigen Abschnittes in einem Rücksprung radial nach außen zurückgesetzt, so dass die Kontaktlaschen 3 gegenüber dem kreisringförmigen Abschnitt nicht in radialer Richtung R nach innen vorstehen.

Zur Kontaktierung einer Messelektronik ist am Außenumfang des kreisringförmigen Abschnittes eine einzige Anschlussfahne 4 vorgesehen, welche in den Fahnenabschnitt B in Richtung der Anschlusseinheit C vorsteht.

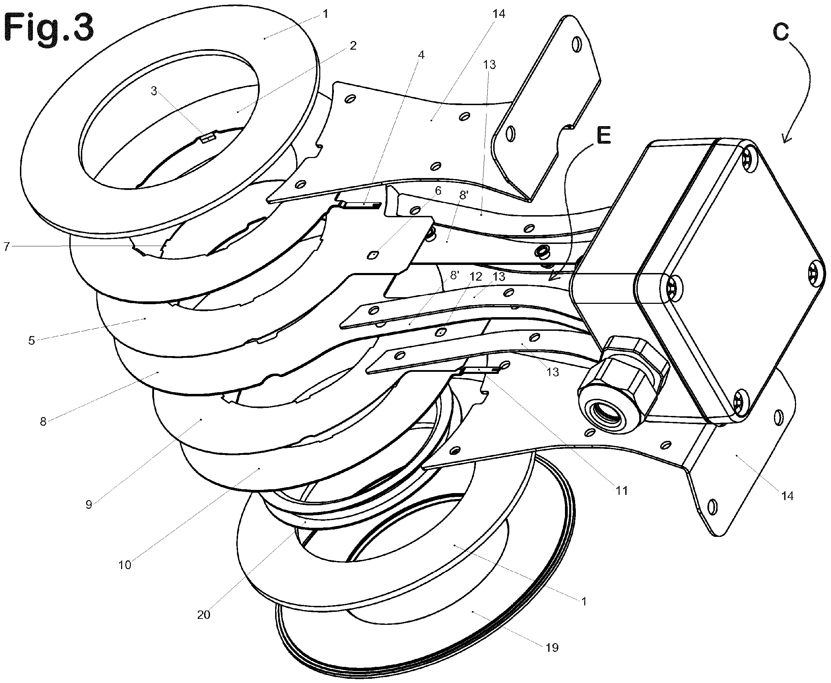

Der Schichtaufbau der thermoelektrischen Messeinrichtung ist insbesondere der Explosionsdarstellung gemäß Fig. 3 zu entnehmen. In axialer Richtung schließt an das erste Scheibenelement 2 eine erste Isolatorscheibe 5 an, welche den kreisringförmigen Bereich des ersten Scheibenelementes 2 vollständig abdeckt. Die Anschlussfahne 4 kann durch eine zugeordnete Öffnung 6 der ersten Isolatorscheibe 5 hindurchtreten.

Für die Kontaktlaschen 3 sind am Innenumfang der Isolatorscheibe 5 mehrere Aussparungen 7 vorgesehen. Benachbart zu der ersten Isolatorscheibe 5 ist eine Tragscheibe 8 vorgesehen, welche sowohl einen kreisringförmigen Abschnitt als auch den Fahnenbereich überspannende Arme 8' aufweist. Die Tragscheibe 8 wird durch eine zweite Isolatorscheibe 9 von einem zweiten Scheibenelement 10 separiert. Das zweite Scheibenelement 10 ist im Ausführungsbeispiel aus einem negativen Thermomaterial (z.B. aus einer Kupfer-Nickel-Legierung) gefertigt. Das zweite Scheibenelement 10 weist ebenfalls einen durchgängigen und ungeteilten kreisringförmigen Abschnitt sowie eine am Außenumfang vorstehende zweite Anschlussfahne 11 auf. Die zweite Anschlussfahne 11 kann in der zweiten Isolatorscheibe 9 durch eine entsprechende Öffnung 12 hindurchtreten.

Einer vergleichenden Darstellung der Fig. 3 und 2 entnimmt man, dass die Lagen des thermoelektrischen Messelementes 2, 5, 8, 9,10 im montierten Zustand jeweils paarweise unmittelbar aneinander anliegen. In einem kreisringförmigen Bereich liegen die benachbarten Schichten dabei vollflächig aneinander an und bilden einen integralen Bestandteil des Flachdichtungsringes. Zur Isolation gegenüber der Dichtauflage 1 und der metallischen Hülle 20 sind die Lagen des thermoelektrischen Messelementes 2, 5, 8, 9,10 im Ausführungsbeispiel vollumfänglich mit einer isolierenden Beschichtung 19 überzogen.

Die Kontaktlaschen 3 des ersten Scheibenelementes 2 überbrücken im zusammengesetzten Zustand vollständig den Abstand zum zweiten Scheibenelement 10, so dass das erste Scheibenelement 2 und das zweite Scheibenelement 10 im Endbereich der Kontaktlaschen 3 jeweils durch eine Schweißung miteinander elektrisch kontaktiert sind. An dieser Kontaktstelle der beiden materialverschiedenen Scheibenelemente 2, 10 ist aufgrund des thermoelektrischen Seebeck-Effektes eine Temperaturmessung möglich. Aufgrund der elektrischen Parallelschaltung der an den Kontaktlaschen 3 gebildeten Kontaktstellen kann jeweils das gemittelte Messsignal am gesamten Innenumfang ermittelt werden.

In Fig. 3 ist überdies dargestellt, dass auf die Arme 8' der Tragscheibe 8 in axialer Richtung z beidseitig Füllbleche 13 aufgesetzt sind, welche zwischen den beiden Armen 8' einen Freiraum E zur Führung der an die Anschlussfahnen 4, 11 angeschlossenen Messleitungen verbleibt. Die Dicke der Füllbleche 13 ist dabei an die Isolatorscheiben 5, 9 angepasst, sodass zwischen den in axialer Richtung z endseitig angebrachten Abdeckungen 14 Platz zur Aufnahme der Messleitungen verbleibt. Die Abdeckungen 14 weisen jeweils einen gewinkelten Endabschnitt auf, woran die Anschlusseinheit C befestigt ist.

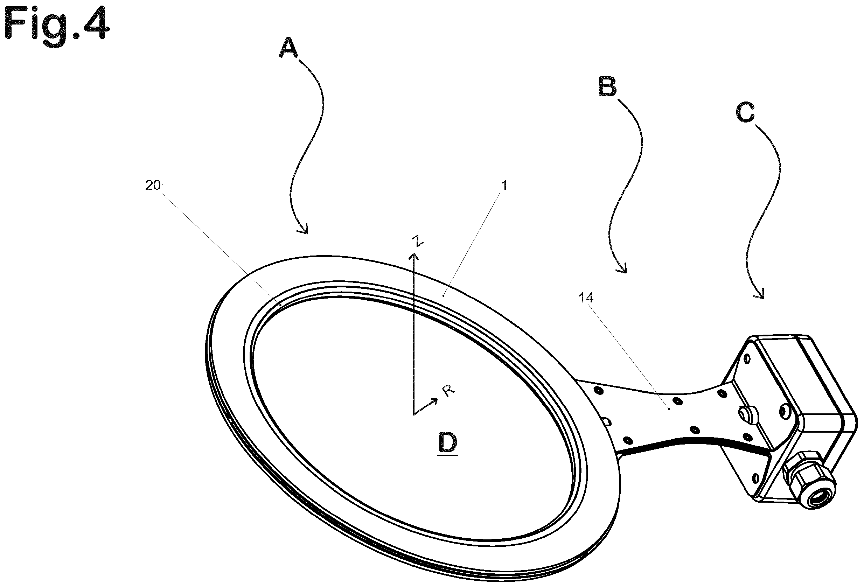

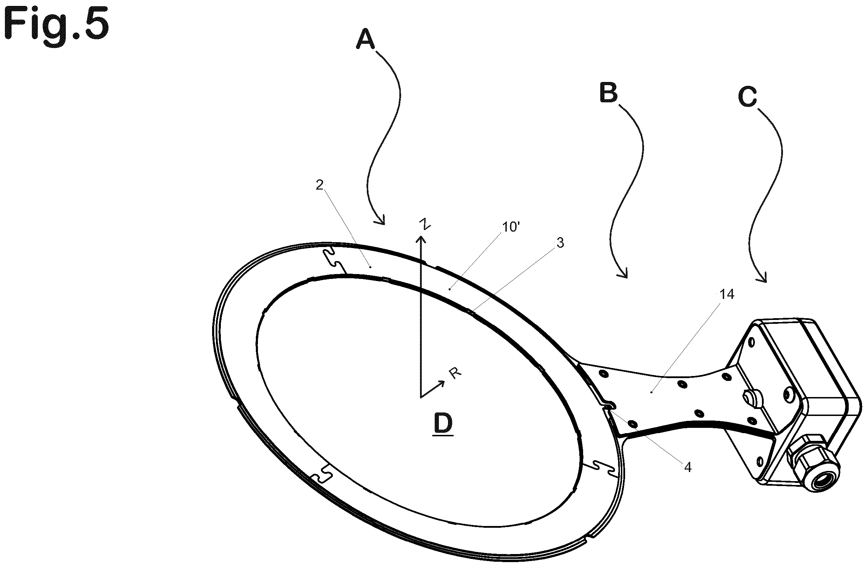

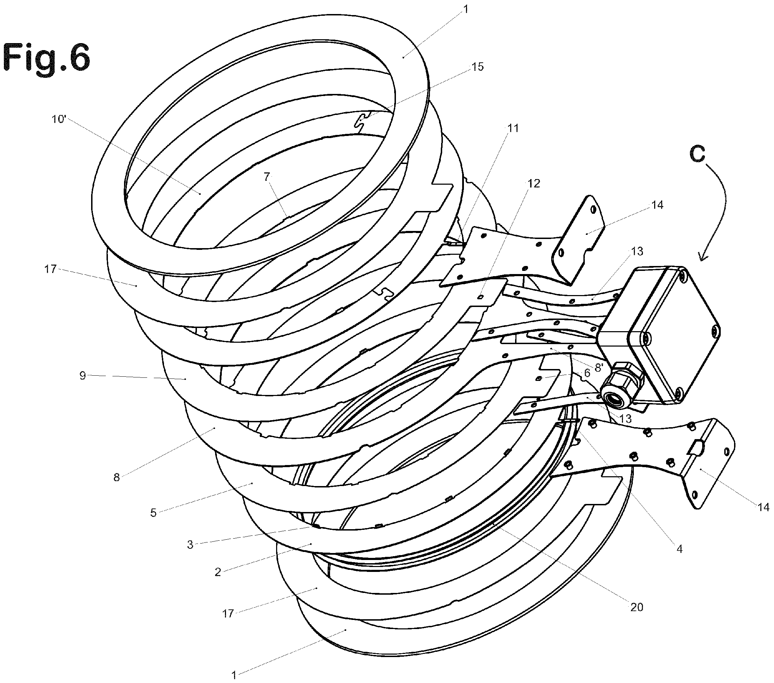

Das in den Fig. 4, 5 und 6 gezeigte Ausführungsbeispiel ist technologisch eng mit der zuvor beschriebenen Variante verwandt. Dort ist ebenfalls eine Flachdichtung dargestellt, welche einen 150er-Nenndurchmesser aufweist. Im Folgenden wird daher vornehmlich auf die Unterschiede eingegangen. Aufgrund des größeren Durchmessers ist in Fig. 5 ersichtlich, dass eine größere Anzahl, nämlich insgesamt zwölf Kontaktlaschen 3 an der Innenseite des ersten Scheibenelementes 2 angeordnet sind. Dieses ist in dem gezeigten Ausführungsbeispiel weiterhin mit einem einteiligen kreisringförmigen Abschnitt ausgebildet. Einer vergleichenden Betrachtung der Fig. 3 und 6 entnimmt man jedoch, dass das zweite Scheibenelement 10' ― abweichend vom vorgezeigten Ausführungsbeispiel ― mehrteilig segmentiert ausgebildet ist. Die drei Segmente des zweiten Scheibenelementes 10' überdecken dabei jeweils einen Bereich von 120° des kreisscheibenförmigen Abschnittes und sind an den Übergangsstellen 15 jeweils formschlüssig mit einem Hinterschneidungsprofil ineinander eingesetzt und stoffschlüssig miteinander verbunden. Die einzelnen Segmente bilden so einen mehrteilig ausgebildeten umlaufenden Kreisring, der auch eine erhöhte Stabilität gegenüber radialen Belastungen aufweist. Zur Montage des zweiten Scheibenelementes 10' können die einzelnen Segmente besonders einfach in axialer Richtung z ineinander eingeschoben und anschließend miteinander verschweißt werden. Im montierten Zustand wird diese Verbindung zusätzlich durch die axial wirkenden Anpresskräfte auf den Flanschdichtungsring gesichert.

In diesem Ausführungsbeispiel treten an die Stelle einer isolierenden Beschichtung 19 zwei Isolatorscheiben 17, welche die Scheibenelemente 2, 10 von den Dichtauflagen 1 und der metallischen Hülle 20 elektrisch isolieren.

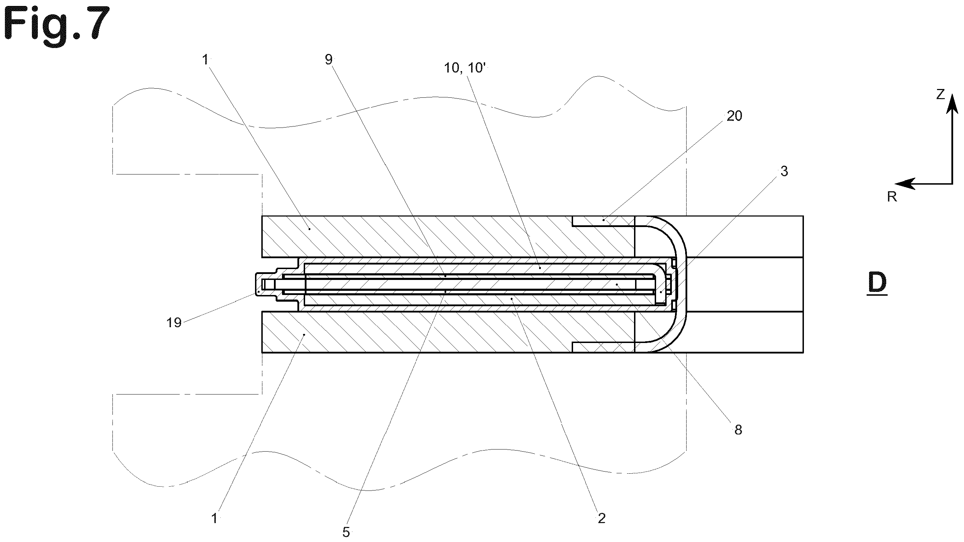

In der Fig. 7 ist schematisch ein radialer, in der z/R-Ebene verlaufender Schnitt, an einer Kontaktstelle zwischen dem ersten Scheibenelement 2 und dem zweiten Scheibenelement 10 bzw. 10' abgebildet. Die Flanschflächen benachbarter Rohrleitungen sind zum besseren Verständnis gestrichelt angedeutet. Die bereits zuvor beschriebene Schichtenfolge ist hier noch einmal deutlich zu erkennen: Das thermoelektrische Messelement wird durch ein erstes Scheibenelement 2 und ein zweites Scheibenelement 10 bzw. 10' gebildet, welche über eine abgewinkelte Kontaktlasche 3 des ersten Scheibenelementes 2 miteinander verbunden sind. Zwischen dem ersten Scheibenelement 2 und dem zweiten Scheibenelement 10, 10' sind ferner eine Tragscheibe 8 zur mechanischen Stabilisierung sowie zwei Isolatorscheiben 5, 9 zur elektrischen Trennung der beiden Scheibenelemente 2, 10, 10' untereinander und gegenüber der Tragscheibe 8 vorgesehen.

In den gezeigten Ausführungsbeispielen ist die Dichtstruktur aus zwei Dichtauflagen 1 und einer metallischen Hülle 20 ausgebildet, welche unmittelbar mit der isolierenden Beschichtung 19 in Kontakt steht. Die isolierende Beschichtung 19 muss folglich aus einem elektrisch nicht leitenden Material beispielsweise aus einer Kunststoffbeschichtung gebildet sein. Aus der Figur ist überdies erkennbar, dass das thermoelektrische Messelement (im Wesentlichen 2, 10, 10') gegenüber der Durchgangsöffnung D durch die isolierende Beschichtung 19 und die metallische Hülle 20 abgedeckt ist. Von der Innenseite der Rohrleitung ist der erfindungsgemäße Flanschdichtungsring nicht von einer herkömmlichen Dichtung zu unterscheiden. Der Innendurchmesser der Dichtungsstruktur in Gestalt der metallischen Hülle 20 ist gegenüber dem anschließenden Rohrstück zurückgesetzt oder fluchtend angeordnet, so dass ein störungsfreier Medienstrom durch die Durchgangsöffnung gewährleistet werden kann.

In einer weiteren, im Übrigen nicht dargestellten Ausführungsform ist es überdies möglich, dass der Kontakt zwischen dem ersten Scheibenelement 2 und dem zweiten Scheibenelement 10 bzw. 10' an einer einzigen, vollständig umlaufenden Kontaktstelle erfolgt. In diesem Fall kann sich insbesondere die Kontaktlasche 3 des ersten Scheibenelementes 2 über den gesamten Außenumfang der Durchgangsöffnung D erstrecken, so dass die Darstellung gemäß Fig. 7 mit jeder radialen Schnittebene übereinstimmt.

In den nachfolgenden Ausführungsbeispielen ist der erfindungsgemäße Flanschdichtungsring als profilierte sogenannte Kammdichtung ausgebildet. Hierbei ist die Dichtstruktur in Form eines metallischen Dichtformkörpers 1' verwirklicht, welcher von einer hohlzylindrischen Grundform abgeleitet ist. Die Breite des Zylinderringes b (Differenz aus Außen- und Innenradius) ist dabei größer als die Dicke d des Dichtformkörpers 1' in z-Richtung. Die Anlageflächen des Dichtformkörpers 1' in Axialrichtung z weisen dabei eine Profilierung aus mehreren konzentrisch um die Längsachse z angeordneten Erhebungen und Vertiefungen auf, welche bevorzugt durch Drehen in den Grundkörper eingebracht werden.

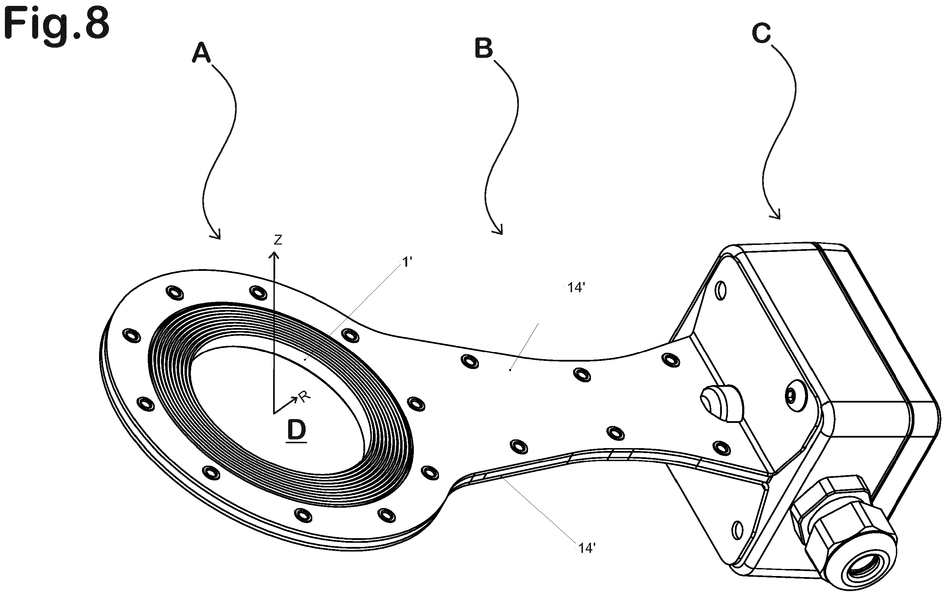

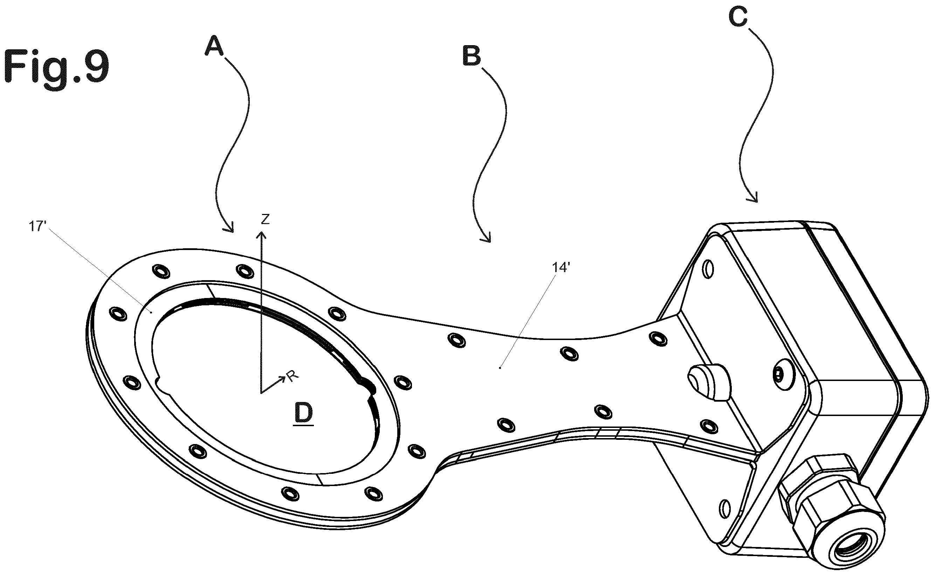

Bereits in der Fig. 8 ist erkennbar, dass die beiden Abdeckungen 14' ― abweichend zu den zuvor gezeigten Ausführungsbeispielen ― einen kreisringförmigen Abschnitt aufweisen, welcher den Dichtformkörper 1' vollständig umschließt. In einer vergleichenden Betrachtung der Fig. 8 und 9 ist erkennbar, dass die von den Befestigungsabschnitten 14' gehaltene thermoelektrische Messeinrichtung sich nur über einen Teil der radialen Erstreckung des Dichtformkörpers 1' nach innen erstreckt.

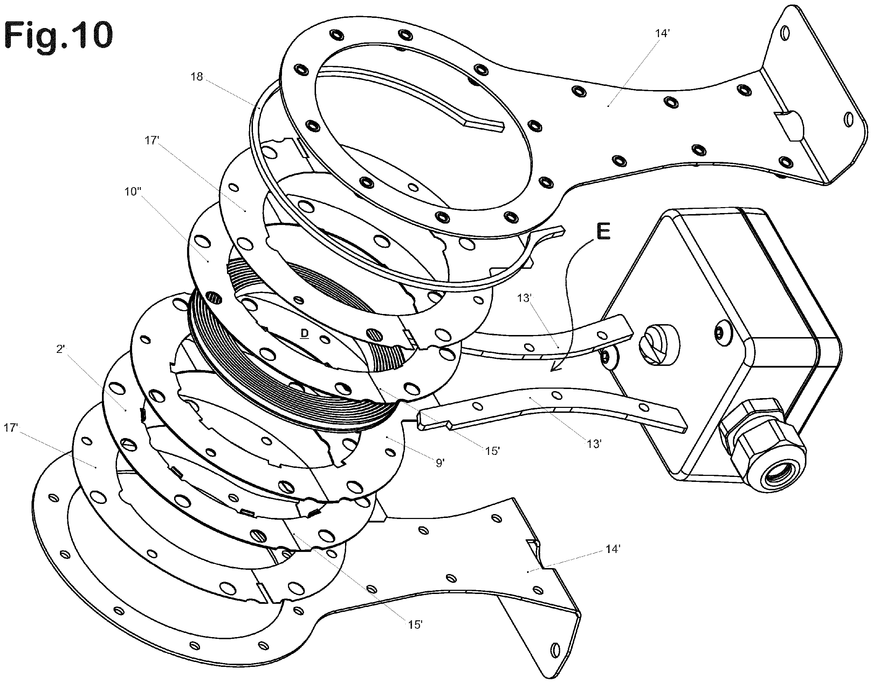

Der Fig. 10 ist der Schichtaufbau der thermoelektrischen Messeinrichtung in diesem Ausführungsbeispiel zu entnehmen: Das erste Scheibenelement 2' und das zweite Scheibenelement 10" sind dabei gegenüber den beiden Abdeckungen 14' durch zwei Isolatorscheiben 17' elektrisch isoliert. Zwischen dem ersten Scheibenelement 2' und dem zweiten Scheibenelement 10" ist lediglich eine einzige Isolatorscheibe 5' angeordnet. Sowohl die beiden Scheibenelemente 2', 10" als auch die Isolatorscheiben 5', 17' sind jeweils zweiteilig ausgebildet, wobei der kreisringförmige Abschnitt hälftig in zwei Halbringe á 180° geteilt ist.

In dem vorliegenden Ausführungsbeispiel ist eine separate Tragscheibe nicht vorgesehen. Stattdessen erstrecken sich im Fahnenabschnitt B zwei verstärkte Füllbleche 13', welche in axialer z-Richtung eine Dicke aufweisen, die der Summe der Dicken der Isolatorscheiben 5', 17' sowie der beiden Scheibenelemente 2', 10" entspricht. Die beiden Füllbleche 13' erstrecken sich somit von einer Abdeckung 14' zur anderen.

Der Außendurchmesser der beiden Scheibenelemente 2', 10" sowie der Isolatorscheiben 5', 17' ist im kreisringförmigen Abschnitt geringer als der Außendurchmesser des kreisringförmigen Abschnittes der beiden Abdeckungen 14'. Die Differenz wird mit einem nicht leitenden Füllmaterial 18 aufgefüllt, damit sich keine unerwünschte Kontaktierung zwischen den einzelnen Schichten einstellt.

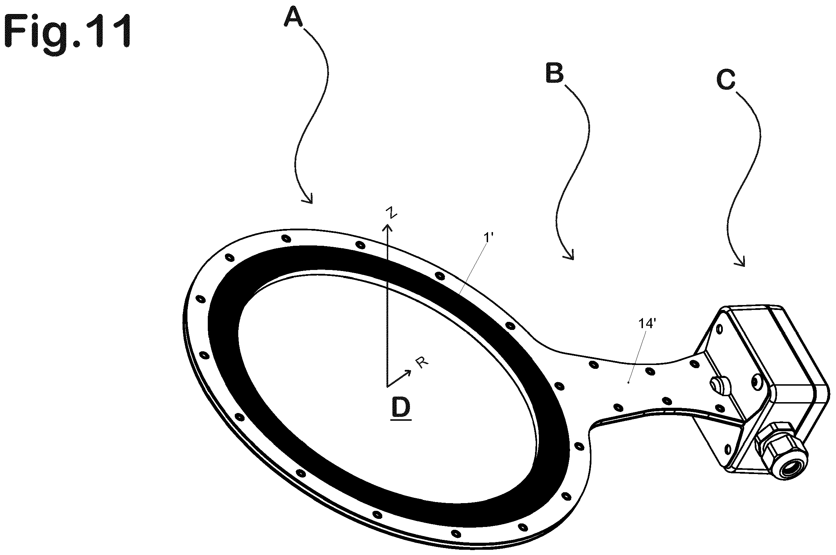

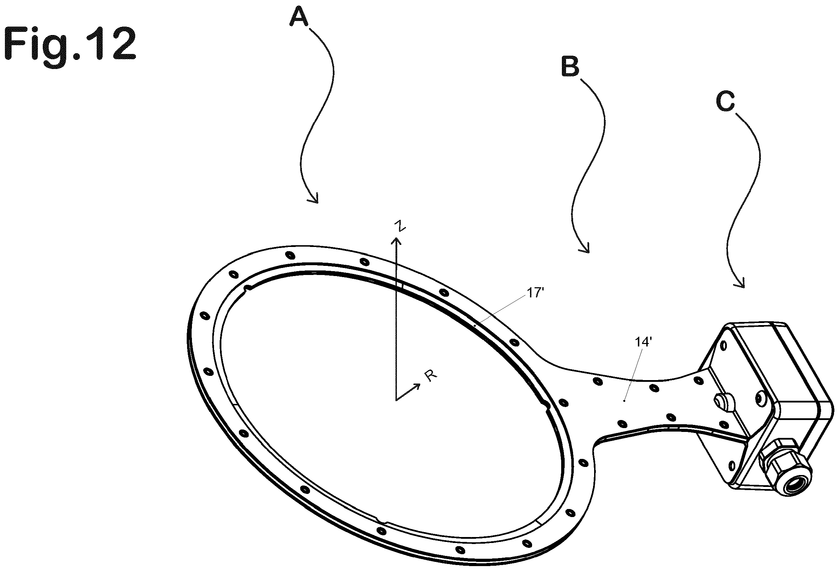

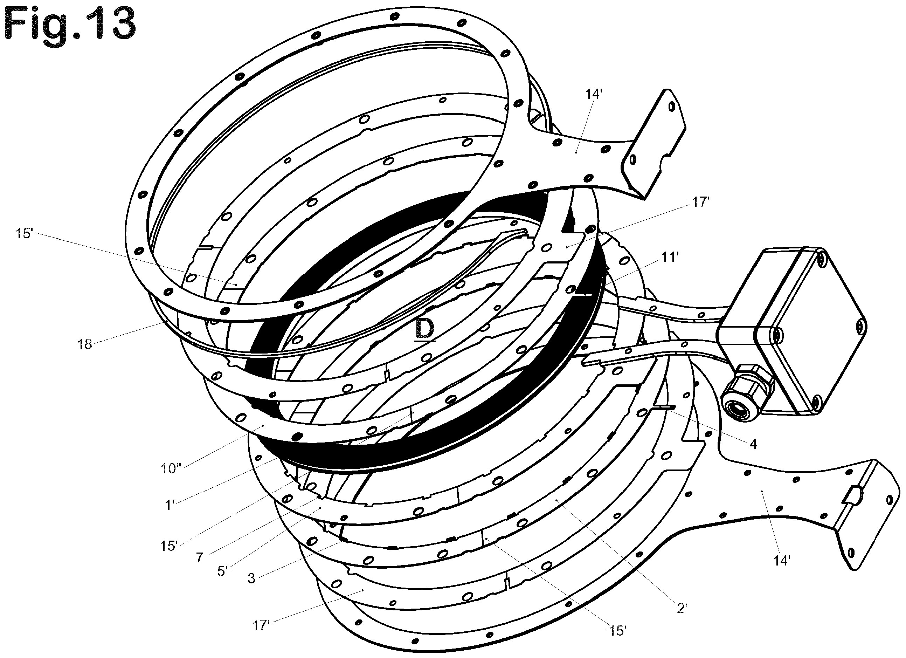

Das Paket wird durch Nieten zusammengehalten, welche sich von einer Abdeckung 14' zur anderen erstreckt und zugeordnete Löcher der dazwischen gelagerten Schichten berührungsfrei durchgreift. In den Fig. 11, 12 und 13 ist eine Variante dargestellt, welche sich dem Ausführungsbeispiel der Fig. 8 bis 10 im Wesentlichen durch eine vergrößerte Nennweite von 150 mm auszeichnet. Bei einer vergleichenden Betrachtung der Fig. 10 und 13 ist erkennbar, dass sich der Schichtaufbau aus Isolatorscheiben 5', 17' und Scheibenelementen 2', 10" durch eine drei- statt zweiteilige Segmentierung auszeichnet. Die einzelnen Segmente decken dabei jeweils 120° des Umfangs um die Durchgangsöffnung D ab. Die Segmente sowohl der Isolatorscheiben 5', 17' als auch der beiden Scheibenelemente 2', 10" stoßen dabei stumpf entlang von radial verlaufenden Trennlinien aneinander. Der Zusammenhalt wird durch die Verschweißung der Übergangsstellen 15" der Scheibenelemente und durch Vernieten mit den Abdeckungen 14' sichergestellt.

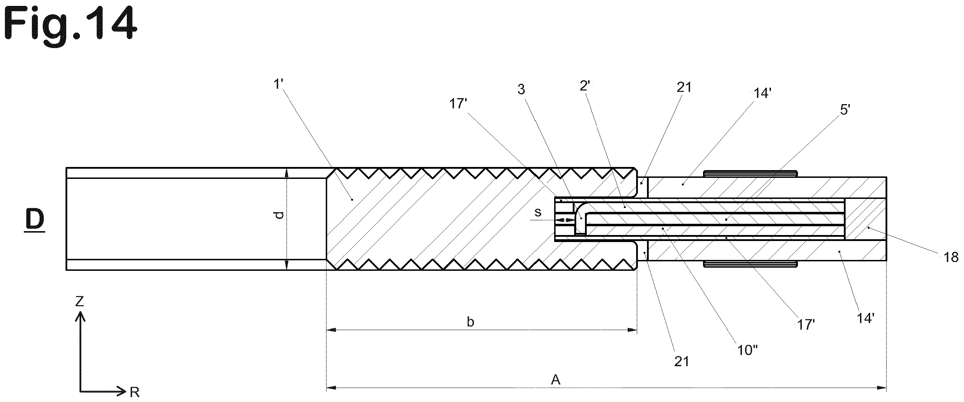

Die Fig. 14 zeigt schematisch einen radialen Schnitt durch den kreisringförmigen Bereich A eines der beiden Ausführungsbeispiele gemäß den Fig. 8 bis 13. Der Dichtformkörper 1' ist dabei aus einem metallischen Werkstoff einstückig ausgebildet und geht von einem hohlzylindrischen Grundkörper mit einer Wandungsbreite b und einer Dicke d aus. In die ober- bzw. unterseitig dargestellten Anlageflächen sind konzentrisch umlaufende Nuten eingebracht, welche den sogenannten Dichtungskamm bilden.

Die thermoelektrische Messeinrichtung ist in eine radiale Richtung R von außen hin offene Nut eingesetzt. Diese umfasst eine erste und zweite äußere Isolatorscheibe 17', welche unmittelbar an den seitlichen Wänden der Nut anliegen und sich bis an den Grund der Nut erstrecken. Dazwischen sind eine erstes Scheibenelement 2' und ein zweites Scheibenelement 10" angeordnet, welche an einer Kontaktlasche 3 des ersten Scheibenelementes 2' miteinander in elektrischem Kontakt stehen. Zwischen den beiden Scheibenelementen 2', 10" ist eine weitere Isolatorscheibe 5' angeordnet, welche den gesamten Zwischenraum ausfüllt und dass Messelement in der Nut konzentrisch positioniert. In radialer Richtung verbleibt zwischen der Kontaktlasche 3 und dem Grund der Nut ein Abstand der Breite s, welcher als Luftspalt ausgebildet oder mit einem elektrisch isolierenden, vorzugsweise thermisch leitfähigen, Material ausgefüllt sein kann.

Die Schichtung der thermoelektrischen Messeinrichtung wird außenseitig von zwei Abdeckstücken 14' umschlossen, welche diese in axialer Richtung z zusammenhalten. In radialer Richtung R verbleibt zwischen dem Dichtformkörper 1' und den beiden Abdeckungen 14' jeweils ein thermisch isolierender Spalt 21. Dieser dient der thermischen Trennung zwischen dem Dichtungselement und dem Außenbereich des Flanschdichtungsrings.

In radialer Richtung R außenseitig schließt an die Schichten der thermoelektrischen Messeinrichtung 2', 10", 5', 17' ein nicht leitendes Füllmaterial 18 an, welches die Segmente der Schichten nach außen gegen Umwelteinflüsse abschirmt.

Zur Erhöhung der Nenndruckstufe eines erfindungsgemäßen Flanschdichtungsringes ist es notwendig, sowohl die radiale Abstützung des Dichtformkörpers 1' als auch die Belastbarkeit in axialer Richtung zur Aufnahme erhöhter Anzugsmomente zwischen den Rohrflanschen vorzusehen. Hierzu ist im Rahmen einer bevorzugten Ausgestaltung der Erfindung vorgesehen, dass die Breite des kreisringförmigen Bereiches A erhöht wird, wobei die Breite b des Dichtformkörpers 1' gleich bleibt. Die erhöhten radialen und axialen Momente bei einer höheren Nenndruckstufe können sicher durch die verbreiterten kreisringförmigen Abschnitte der Abdeckungen 14' sowie durch vergrößerte Isolatorscheiben 5', 17', Scheibenelemente 2', 10" kompensiert werden. Durch die gleichbleibende Größe des Dichtformkörpers 1' bleibt auch bei einer erhöhten Nenndruckstufe der thermisch trennende Luftspalt 21 in vorteilhafter Weise weit innerhalb der Flanschverbindung.

In einer besonders bevorzugten Ausgestaltung der Erfindung kann es vorgesehen sein, eine Serie von Flanschdichtungsringen mit unterschiedlichen Nennweiten und -drücken in einem modularen System bereitzustellen. Dabei ist die Ausbildung des Dichtformkörpers 1' jeweils ausschließlich abhängig von der Wahl des Nenndurchmessers. Die für eine bestimmte Nenndruckstufe benötigte Abstützung wird über die Variation der übrigen Komponenten wie zuvor beschrieben bereitgestellt.

Allgemein kann die Abdeckung 14,14' in Länge und Ausführung in jedem Anwendungsfall an die Isolierdicke der Rohrleitung angepasst werden. Die Enden der Abdeckung 14,14' sind um 90° abgekantet, um die Montage verschiedener, an den Anwendungsfall angepasster Anschlusseinheiten C flexibel zu ermöglichen. Die Anschlusseinheit C wird dabei für jedes System individuell ausgelegt und ausgestattet. Das Gesamtsystem liegt somit bei Lieferung bereits montage-, anschluss- und betriebsbereit vor.

### Bezugszeichenliste

- A: Bereich Dichtungselement
- B: Bereich Fahne
- C: Bereich Anschlusseinheit
- D: zentral angeordneten Durchgangsöffnung
- E: Freiraum
- R: radiale Richtung
- z: Axialrichtung
- b: Breite
- 1: Dichtauflage
- 1': Dichtformkörper
- 2, 2': Scheibenelement
- 3: Kontaktlaschen
- 4: Anschlussfahne
- 5, 5': Isolatorscheibe
- 6: Öffnung
- 7: Aussparung
- 8: Tragscheibe
- 8': Arme der Tragscheibe
- 9: Isolatorscheibe
- 10, 10', 10": Scheibenelement
- 11: Anschlussfahne
- 12: Öffnung
- 13, 13': Füllblech
- 14, 14': Abdeckung
- 15, 15': Übergangsstellen
- 17,17': Isolatorscheibe
- 18: nicht leitendes Füllmaterial
- 19: isolierende Beschichtung
- 20: metallische Hülle
- 21: thermisch isolierender Spalt

## Patentansprüche

1. Flanschdichtungsring mit einer zentral angeordneten Durchgangsöffnung (D) umfassend eine integrierte thermoelektrische Messeinrichtung, wobei die Messeinrichtung ein erstes elektrisch leitendes Scheibenelement (2,2') und ein zweites elektrisch leitendes Scheibenelement (10,10',10") aufweist, wobei das erste Scheibenelement (2,2') und das zweite Scheibenelement (10,10',10") die Durchgangsöffnung (D) vollständig umschließen und wobei das erste Scheibenelement (2,2') und das zweite Scheibenelement (10,10',10") ausschließlich durch zumindest eine an der der Durchgangsöffnung (D) zugewandten Innenseite angeordnete Kontaktstelle miteinander elektrisch verbunden sind, wobei zwischen der Innenseite der beiden Scheibenelemente (2,2',10,10',10") und der Durchgangsöffnung (D) ein Abstand verbleibt, an dem die Messeinrichtung von einer Dichtstruktur (1,1',20) abgedeckt ist, **dadurch gekennzeichnet, dass** die Dichtstruktur entweder durch zwei Dichtauflagen (1) in Verbindung mit einer metallischen Hülle (20) gebildet ist oder die Dichtstruktur aus einem massiven Dichtformkörper (1') gebildet ist, wobei der Dichtformkörper (1') eine in radialer Richtung (R) nach außen hin offene Nut aufweist, in welche die thermoelektrische Messeinrichtung (2,2',10,10',10") eingesetzt ist.

2. Flanschdichtungsring nach Anspruch 1, **dadurch gekennzeichnet, dass** zwischen dem ersten Scheibenelement (2,2') und dem zweiten Scheibenelement (10,10',10") zumindest eine Isolatorscheibe (5,5',9) angeordnet ist.

3. Flanschdichtungsring nach Anspruch 2, **dadurch gekennzeichnet, dass** zwischen dem ersten Scheibenelement (2,2') und dem zweiten Scheibenelement (10,10',10") zumindest eine Tragscheibe (8) angeordnet ist welche beidseitig von jeweils zumindest einer Isolatorscheibe (5,5',9) umschlossen ist.

4. Flanschdichtungsring nach einem der Ansprüche 1 bis 3, **dadurch gekennzeichnet, dass** die thermoelektrische Messeinrichtung gegenüber den weiteren Bauteilen des Flanschdichtungsringes elektrisch isoliert ist.

5. Flanschdichtungsring nach Anspruch 4, **dadurch gekennzeichnet, dass** zur elektrischen Isolation auf der thermoelektrischen Messeinrichtung in axialer Richtung beidseitig eine Isolatorscheibe (17, 17') angeordnet ist.

6. Flanschdichtungsring nach Anspruch 4, **dadurch gekennzeichnet, dass** die thermoelektrische Messeinrichtung zur elektrischen Isolation vollumfänglich mit einer isolierenden Beschichtung (19) ummantelt ist.

7. Flanschdichtungsring nach Anspruch 2 oder 3, **dadurch gekennzeichnet, dass** die Isolatorscheibe (5, 5', 9, 17, 17') aus einem temperatur- und druckfesten elektrisch isolierenden Material, insbesondere Glimmer, gebildet ist.

8. Flanschdichtungsring nach einem der Ansprüche 1 bis 7, **dadurch gekennzeichnet, dass** das erste Scheibenelement (2,2') und das zweite Scheibenelement (10,10',10") an einer einzigen, vollständig umlaufenden Kontaktstelle miteinander verbunden sind.

9. Flanschdichtungsring nach einem der Ansprüche 1 bis 7, **dadurch gekennzeichnet, dass** das erste Scheibenelement (2,2') und das zweite Scheibenelement (10,10'), an zumindest zwei Kontaktstellen miteinander verbunden sind.

10. Flanschdichtungsring nach Anspruch 8 oder 9, **dadurch gekennzeichnet, dass** das jede Kontaktstelle durch eine Schweißverbindung zwischen dem ersten Scheibenelement und dem zweiten Scheibenelement gebildet ist.

11. Flanschdichtungsring nach einem der Ansprüche 8 bis 10, **dadurch gekennzeichnet, dass** jede Kontaktstelle durch einen gegenüber dem in der Radialebene verlaufenden kreisringförmigen Abschnitt des ersten Scheibenelements (2,2') in Axialrichtung (z) abgekantete Kontaktlasche (3) des ersten Scheibenelementes (2,2') gebildet ist, welche sich bis zu dem zweiten Scheibenelement (10,10',10") erstreckt.

12. Flanschdichtungsring nach einem der Ansprüche 1 bis 11, **dadurch gekennzeichnet, dass** das erste Scheibenelement und das zweite Scheibenelement jeweils einteilig umlaufend ausgebildet sind.

13. Flanschdichtungsring nach einem der Ansprüche 1 bis 11, **dadurch gekennzeichnet, dass** das erste Scheibenelement (2') und/oder das zweite Scheibenelement (10',10") in Umfangsrichtung segmentiert ausgebildet ist.

14. Rohrleitungsanordnung mit einem ersten Flansch ausbildenden ersten Rohrstück und einem einen zweiten Flansch ausbildenden zweiten Rohrstück, wobei der erste Flansch und der zweite Flansch unter Zwischenschaltung eines Flanschdichtungsrings nach einem der Ansprüche 1 bis 13 miteinander verbunden sind, wobei die Durchgangsöffnung (D) denselben oder einen geringfügig größeren Innendurchmesser wie das erste Rohrstück und das zweite Rohrstück aufweist und wobei die Messeinrichtung nicht direkt an einen durch das erste Rohrstück und das zweite Rohrstück gebildeten Rohrinnenraum angrenzt.

## Claims

1. Flange seal ring having a centrally arranged through opening (D) comprising an integrated thermoelectric measuring device, wherein the measuring device comprises a first electrically conducting disk element (2, 2') and a second electrically conducting disk element (10, 10', 10"), wherein the first disk element (2, 2') and the second disk element (10, 10', 10") completely enclose the through opening (D) and wherein the first disk element (2, 2') and the second disk element (10, 10', 10") are electrically connected to one another only by at least one contact point arranged on the inner side facing the through opening (D), wherein between the inner side of the two disk elements (2, 2', 10, 10', 10") and the through opening (D) there remains a spacing at which the measuring device is covered by a sealing structure (1, 1', 20), **characterized in that** the sealing structure is either formed by two sealing overlays (1) combined with a metal sleeve (20) or the sealing structure is formed from a solid sealing moulding (1'), wherein the sealing moulding (1') has an outwardly open groove in the radial direction (R) in which the thermoelectric measuring device (2, 2', 10, 10', 10") is inserted.

2. Flange seal ring according to Claim 1, **characterized in that** at least one insulator disk (5, 5', 9) is arranged between the first disk element (2, 2') and the second disk element (10, 10', 10").

3. Flange seal ring according to Claim 2, **characterized in that** at least one supporting disk (8) is arranged between the first disk element (2, 2') and the second disk element (10, 10', 10") which is enclosed by respectively at least one insulator disk (5, 5', 9) on both sides.

4. Flange seal ring according to one of Claims 1 to 3, **characterized in that** the thermoelectric measuring device is electrically insulated with respect to the further components of the flange seal ring.

5. Flange seal ring according to Claim 4, **characterized in that** an insulator disk (17, 17') is arranged on both sides on the thermoelectric measuring device in the axial direction for electrical insulation.

6. Flange seal ring according to Claim 4, **characterized in that** the thermoelectric measuring device is ensheathed over its entire circumference with an insulating coating (19) for electrical insulation.

7. Flange seal ring according to Claim 2 or 3, **characterized in that** the insulator disk (5, 5', 9, 17, 17') is formed from a temperature and pressureresistant electrically insulating material, in particular mica.

8. Flange seal ring according to one of Claims 1 to 7, **characterized in that** the first disk element (2, 2') and the second disk element (10, 10', 10") are connected to one another at a single completely circumferential contact point.

9. Flange seal ring according to one of Claims 1 to 7, **characterized in that** the first disk element (2, 2') and the second disk element (10, 10', 10") are connected to one another at at least two contact points.

10. Flange seal ring according to Claim 8 or 9, **characterized in that** each contact point is formed by a weld connection between the first disk element and the second disk element.

11. Flange seal ring according to one of Claims 8 to 10, **characterized in that** each contact point is formed by a contact tab (3) of the first disk element (2, 2') which is bevelled in the axial direction (z) with respect to the annular section of the first disk element (2, 2') running in the radial plane, which extends as far as the second disk element (10, 10', 10") .

12. Flange seal ring according to one of Claims 1 to 11, **characterized in that** the first disk element and the second disk element are configured circumferentially in one part in each case.

13. Flange seal ring according to one of Claims 1 to 11, **characterized in that** the first disk element (2') and/or the second disk element (10, 10', 10") are configured to be segmented in the circumferential direction.

14. Pipeline arrangement comprising a first pipe piece forming a first flange and a second pipe piece forming a second flange, wherein the first flange and the second flange are connected to one another with an interposed flange seal ring according to one of Claims 1 to 13, wherein the through opening (D) has the same or a slightly larger internal diameter than the first pipe piece and the second pipe piece and wherein the measuring device does not directly adjoin a pipe interior formed by the first pipe piece and the second pipe piece.

## Revendications

1. Bague d'étanchéité pour bride, pourvue d'un orifice de passage (D) placé au centre, comprenant un système de mesure thermoélectrique intégré, le système de mesure comportant un élément en forme de disque (2,2') conducteur électrique et un deuxième élément en forme de disque (10,10',10") conducteur électrique, le premier élément en forme de disque (2,2') et le deuxième élément en forme de disque (10,10',10") entourant totalement l'orifice de passage (D) et le premier élément en forme de disque (2,2') et le deuxième élément en forme de disque (10,10',10") étant électriquement connectés l'un avec l'autre exclusivement par au moins un point de contact placé sur la face intérieure dirigée vers l'orifice de passage (D), entre la face intérieur des deux éléments en forme de disques (2,2',10,10',10") et l'orifice de passage (D) restant un écart sur lequel le système de mesure est recouvert par une structure d'étanchéité (1,1',20), **caractérisée en ce que** la structure d'étanchéité est formée soit en étant en liaison par deux appuis d'étanchéité (1) avec une gaine (20) métallique ou la structure d'étanchéité est formée en un corps moulé d'étanchéité (1') massif, le corps moulé d'étanchéité (1') comportant une rainure ouverte vers l'extérieur en direction radiale (R), dans laquelle est inséré le système de mesure (2,2',10,10',10") thermoélectrique.

2. Bague d'étanchéité pour bride selon la revendication 1, **caractérisée en ce qu'**entre le premier élément en forme de disque (2,2') et le deuxième élément en forme de disque (10,10',10") est placé au moins un disque d'isolateur (5,5',9).

3. Bague d'étanchéité pour bride selon la revendication 2, **caractérisée en ce qu'**entre le premier élément en forme de disque (2,2') et le deuxième élément en forme de disque (10,10',10") est placé au moins un disque porteur (8), lequel est entouré de part et d'autre par chaque fois au moins un disque d'isolateur (5,5',9).

4. Bague d'étanchéité pour bride selon l'une quelconque des revendications 1 à 3, **caractérisée en ce que** le système de mesure thermoélectrique est électriquement isolé par rapport aux autres composants de la bague d'étanchéité pour bride.

5. Bague d'étanchéité pour bride selon la revendication 4, **caractérisée en ce que** pour l'isolation électrique, un disque d'isolateur (17, 17') est placé de part et d'autre du système de mesure thermoélectrique, en direction axiale.

6. Bague d'étanchéité pour bride selon la revendication 4, **caractérisée en ce que** pour l'isolation électrique, le système de mesure thermoélectrique est enveloppé sur toute sa périphérie d'un revêtement (19) isolant.

7. Bague d'étanchéité pour bride selon la revendication 2 ou 3, **caractérisée en ce que** le disque d'isolateur (5, 5', 9, 17, 17') est formé en une matière isolante électrique, résistant aux températures et à la pression, notamment en mica.

8. Bague d'étanchéité pour bride selon l'une quelconque des revendications 1 à 7, **caractérisée en ce que** le premier élément en forme de disque (2,2') et le deuxième élément en forme de disque (10,10',10") sont connectés l'un avec l'autre sur un unique point de contact, totalement périphérique.

9. Bague d'étanchéité pour bride selon l'une quelconque des revendications 1 à 7, **caractérisée en ce que** le premier élément en forme de disque (2,2') et le deuxième élément en forme de disque (10,10'), sont connectés l'un avec l'autre sur au moins deux points de contact.

10. Bague d'étanchéité pour bride selon la revendication 8 ou 9, **caractérisée en ce que** chaque point de contact est formé d'une liaison soudée entre le premier élément en forme de disque et le deuxième élément en forme de disque.

11. Bague d'étanchéité pour bride selon l'une quelconque des revendications 8 à 10, **caractérisée en ce que** chaque point de contact est formé d'une patte de contact (3) du premier élément en forme disque (2,2') chanfreinée dans la direction axiale (z) par rapport au segment en forme d'anneau circulaire s'écoulant dans le plan radial du premier élément en forme de disque (2,2'), qui s'étend jusqu'au deuxième élément en forme de disque (10,10',10").

12. Bague d'étanchéité pour bride selon l'une quelconque des revendications 1 à 11, **caractérisée en ce que** le premier élément en forme de disque et le deuxième élément en forme de disque sont conçus chacun en étant périphériques en monobloc.

13. Bague d'étanchéité pour bride selon l'une quelconque des revendications 1 à 11, **caractérisée en ce que** le premier élément en forme de disque (2') et/ou le deuxième élément en forme de disque (10,10',10") sont conçus en étant segmentés en direction périphérique.

14. Ensemble de tuyauterie, pourvu d'une première pièce tubulaire formant une première bride et d'une deuxième pièce tubulaire formant une deuxième bride, la première bride et la deuxième bride étant reliées l'une à l'autre avec interposition d'une bague d'étanchéité pour brides selon l'une quelconque des revendications 1 à 13, l'orifice de passage (D) présentant un diamètre intérieur identique ou légèrement supérieur à celui de la première pièce tubulaire et de la deuxième pièce tubulaire et le système de mesure n'étant pas directement adjacent à un espace intérieur de tube formé par la première pièce tubulaire et la deuxième pièce tubulaire.
